# EUROPÄISCHE PATENTSCHRIFT

(11) **EP 3 807 067 B1**
(45) Veröffentlichungstag und Bekanntmachung des Hinweises auf die Patenterteilung: **28.09.2022**
(21) Anmeldenummer: 19726994.7
(22) Anmeldetag: 27.05.2019
(51) Int. Cl.: B29B 13/02, B29C 51/04, B29C 51/14, B29C 51/18, B29C 51/42, B32B 7/03

(54) **VERFAHREN UND VORRICHTUNG ZUR HERSTELLUNG VON GEFORMTEN TEXTILEN MEHRSCHICHTVERBUNDEN**
METHOD AND DEVICE FOR PRODUCING FORMED TEXTILE MULTILAYER COMPOSITES
PROCÉDÉ ET DISPOSITIF DE FABRICATION DE COMPOSITES MULTICOUCHES TEXTILES FAÇONNÉS

(30) Priorität: 13.06.2018 DE 102018114125
(43) Veröffentlichungstag der Anmeldung: 21.04.2021
(73) Patentinhaber: Adler Pelzer Holding GmbH, 58099 Hagen (DE)
(72) Erfinder: AL SAYED SABSABI, Oussama, 35685 Dillenburg-Manderbach (DE); GERST, Matthias, 63755 Alzenau (DE); HERZOG, Uwe, 63755 Alzenau (DE); SCHULZE, Volkmar, 84069 Schierling (DE)
(74) Vertreter: Bittner, Bernhard
(86) Internationale Anmeldenummer: PCT/EP2019/063625
(87) Internationale Veröffentlichungsnummer: WO 2019/238398

(56) Entgegenhaltungen:
- DE-A1- 3 020 595
- US-A1- 2003 034 118

## Beschreibung

Die vorliegende Erfindung betrifft ein Verfahren sowie eine Vorrichtung zur Herstellung von geformten textilen Mehrschichtverbunden. Insbesondere betrifft die Erfindung ein Verfahren, bei dem ein textiler Mehrschichtverbund gelegt und kaschiert sowie verstreckt wird und anschließend zu einer Oberware einer Bodenverkleidung im Automobilbereich geformt wird unter der Maßgabe der Materialeinsparung und Zykluszeitreduzierung.

Die im Automobilbereich eingesetzten Bodenverkleidungen erfüllen verschiedene Funktionen, denen man bei Design und Herstellung gerecht werden muss. Zum einen bestehen gewisse ästhetische Ansprüche an die Oberflächenoptik sowie eine angenehme Haptik. Die Bodenverkleidung muss weiterhin die Oberflächenkonturen der Karosserie nivellieren sowie Aussparungen, wie beispielsweise für die Fondraumheizung und für Kabelkanäle, ermöglichen. Hinzu treten akustische Funktionen, wie Dämpfung, Schallabsorption und Isolation. Die Anforderungen an die Nutzungseigenschaften umfassen einen geringen Verschleiß, hohe Durchtritts- und Biegefestigkeit, gute Reinigungseignung, hohe Lichtbeständigkeit, Temperatur- und Feuchteresistenz. Die Bodenverkleidung sollte zudem das Einschäumen zusätzlicher Bauteile, die Befestigung von Fußmatten sowie von Teilen zur Erhöhung der Trittfestigkeit und Crasheinleger, aber auch das Aufschweißen von Trittschutz und die Befestigung einer Fußstütze, ermöglichen. In Bezug auf das eingesetzte Material ist die Prozesseignung beziehungsweise die Herstellbarkeit sicherzustellen. Das Material sollte sich durch extreme Tiefziehfähigkeit ohne Funktionseinbußen, Kaschierbarkeit, Durchschäumsicherheit des Materialaufbaus sowie Recyclingfähigkeit auszeichnen. In letzter Zeit hat hierbei auch das Emissionsverhalten enorm an Bedeutung gewonnen.

Der heute übliche Materialaufbau einer Bodenverkleidung im Automobilbereich umfasst eine Oberware (Nutzschicht), die typischerweise vorwiegend aus einem Teppich besteht, insbesondere aus Tufting, Dilour oder Flachnadelvlies sowie seltener auch aus TPO, PVC oder Gummi, mit verschiedenen Unterschichten. Als Unterschichten kommen häufig Akustik-/Versteifungsvliese, die in der Regel aus PET- und Mischfaservliesen mit enthaltenen BiCo-Fasern gebildet sind, Schwerfolien (partiell oder ganzflächig), basierend auf PE, PP oder EPDM sowie Dichtfolien/Kontaktfolien-Vliese, bestehend aus PE/PA, PE/PA/PE oder PE/PA/PE+PET, zum Einsatz. Den unteren Abschluss bildet eine Isolation aus PUR-Schaumstoff, Vlies oder Faser-Flock-Formteilen.

Bei Tufting-Teppichen werden als Garnmaterial vorwiegend PA6.6, PA6, PP, rPA(Econyl), PET und rPET sowie die bio-basierenden Polyamide (PA 5.10, PA 6.10) eingesetzt. Übliche Fasermaterialien für Dilour- und FlachnadelvliesTeppiche umfassen PET, PET/PP, PP, PA/PET und rPET, zudem die Bindefasermaterialien PE oder vorzugsweise Mantel-Kern-Zweikomponenten- (BiCo) Fasern, üblicherweise coPET/PET.

Bei den Tufting-Qualitäten besteht der Tuftingträger zumeist aus PET/PP, PET/coPET oder PET/PA. Die hier angewandten Fasereinbindungen umfassen insbesondere: bei Tufting-Teppich vorwiegend EVA sowie PE und bei den Dilour- und Flachnadelvlies- Teppichen SBR-Latex oder Acrylat; weiterhin bei Dilour- und Flachnadelvlies-Teppichen Folien, Vliese, Klebstoffe (hot melts), thermoplastische Kunststoffe (vorwiegend PE) sowie das thermo bonding (EP 1 598 476 B1). Des Weiteren finden zunehmend Bindefasern, EVA oder thermoplastische Dispersionen Anwendung. Die Beschichtungen, meist als Klebeschicht für Untervliese, aber auch zur Versteifung, umfassen vorwiegend PE oder PP.

Für die Herstellung von Bodenverkleidungen im Automobilbau, der Verformung der Oberware, bei der die Einzelschichten der Oberware als Platinen- oder Rollenware vorliegen, finden sogenannte Thermoverformungs-Anlagen Anwendung. Diese können vollautomatisch, halbautomatisch oder in einem manuellen Verfahren betrieben werden.

Im Stand der Technik sind Thermoverformungsanlagen mit folgenden Vorrichtungen bekannt, die jeweils in einer Durchlaufrichtung hintereinander angeordnet sind:
Warenspeicher > Ablagetisch > Kontaktheizfeld > Strahlerheizfeld > Verformungswerkzeug
Warenspeicher > Ablagetisch > Kontaktheizfeld > Kontaktheizfeld > Verformungswerkzeug
Warenspeicher > Ablagetisch > Kontaktheizfeld > Verformungswerkzeug
Warenspeicher > Ablagetisch > Strahlerheizfeld > Verformungswerkzeug
Der Transport des gelegten Gesamtverbunds erfolgt mittels Transport- und Greifersystemen. Zudem ist auch üblich, mittels pick-and-place, partielle Einzelschichten auf dem Ablagetisch zu platzieren.

In DE 10 2004 046 201 B4 und DE 10 2004 054 299 A1 ist ein manuell ausgeführter Heißprägeprozess mittels beheizbarem Formwerkzeug beschrieben, bei dem der Schichtverbund in das Formwerkzeug (als loser Stapel) eingelegt wird. D1 (DE 30 20 595 A1) offenbart eine Vorrichtung und ein Verfahren zur Herstellung netzförmiger, synthetischer Harzschaumschichten zur Verwendung als Wärmeisolation- und Verpackungsmaterial. Dabei wird eine Vielzahl linearer Schlitze vorbestimmter Lange in eine Bahn aus thermoplastischem Harzschaum in Längsrichtung der Bahn und in mehreren Reihen, die jeweils einen gleichmäßigen Abstand voneinander besitzen, geschnitten, wobei nebeneinanderliegende Schlitze jeweils zueinander versetzt sind, und die Bahn in einem im wesentlichen rechten Winkel zu den geraden Schlitzen bei einer Temperatur, die das thermoplastische Harz erweichen lasst, gestreckt wird, wobei man die geraden Schlitze zu einer Rautenform oder Sechseckform öffnet.

Im Stand der Technik sind darüber hinaus insbesondere einzelne Vorrichtungen, die als Station einer Thermoverformungsanlage einsetzbar sind, beschrieben.

In DE 10 2007 023 755 A1 sind Spannrahmen offenbart, wobei die Spannzangen zumindest anteilig als durchgehend ausgebildete Klemmschienen ausgebildet sind. DE 10 2014 006 968 A1 beschreibt eine Werkzeugstation und ein Verfahren zum Wechseln eines zweiteiligen Werkzeuges. DE 10 2011 008 955 A1 offenbart eine Heizeinrichtung für eine Heizstation, wobei der Heizkörper entlang des Entfernwegs eine Bewegungskomponente aufweist, projizierbar auf die Transportrichtung und der Heizkörper parallel zur Werkstoffbahn bleibt. In DE 20 2006 020 842 U9 ist eine Vorrichtung zum Thermoformen von Kunststofffolien, insbesondere zum Kaschieren von Formkörpern mit einer Kaschierfolie, beschreiben, bei der die Transportbänder in Bewegungsrichtung geteilt sind, diese unterschiedlich schnell angetrieben werden können sowie in Bewegungsrichtung keilförmig auseinanderlaufend angeordnet sind. DE 10 2012 101 925 B4 betrifft eine Heizplattenanordnung, insbesondere zum Verstellen der Arbeitsbreite der Heizplattenanordnung.

In DE 25 01 366 A1 wird ein Verfahren zur Formgebung von Teppichbahnen mit thermoplastischer Beschichtung mit dem Ziel der Reduzierung der Kühlzeit beschrieben, wobei hierzu das Arbeiten mit Gummituch im Verformungswerkzeug und das Absaugen von Heißlufteinschlüssen im Verformungswerkzeug bei gegebenenfalls gleichzeitigem florseitigen Einblasen von Luft angeführt sind.

Die im Stand der Technik bekannten Verfahren zeichnen sich durch einen geringen Optimierungsgrad in Bezug auf Materialverbrauch und Zyklusszeiten aus.

Ein weiterer Nachteil der aus dem Stand der Technik bekannten Verfahren ist die Schwierigkeit, bei kurzen Zykluszeiten Wärme in die Materialstruktur des Mehrschichtverbundes einzubringen. Hierbei ist insbesondere die heute übliche Materialstruktur und die Flächengewichte der Oberware zu berücksichtigen:

| | |
|---|---|
| Tufting | Flor 260 bis 700 g/m² ; Träger 80 bis 140 g/m² ; Einbindung 50 bis 150 g/m² |
| Dilour | Flor/Faser 300 bis 700 g/m² ; Einbindung 50 bis 160 g/m² ; bis 25% BiCo-Faseranteil |
| Beschichtung der Teppiche selbst (Tufting/Dilour) | 80 bis 2000 g/m² |
| Akustik-/Versteifungsvlies | 250 bis 1200 g/m² |
| Schwerfolie (partiell oder ganzflächig) | 500 bis 8000 g/m² |
| Dichtfolien/Kontaktfolien-Vliese | 40 bis 260 g/m² |

Zu beachten ist hierbei auch, dass florseitig die Temperaturbeaufschlagung durch das Faser- / das Garnmaterial begrenzt ist und insbesondere Dichtfolien/-schichten nicht durch die anliegende Temperatur zerstört werden dürfen.

Andererseits sollten im Schichtverbund selbst Temperaturen anliegen, die ein Dehnen / Verstrecken gut ermöglichen (ohne das zum Beispiel Einzelschichten schmelzen, reißen). Bei der Zeit-/Temperaturführung ist auch zu beachten, dass das finale Bauteil den Anforderungen der Automobilindustrie gerecht werden muss. Hier ist insbesondere der Klima-Wechsel-Test (Schrumpf) und das Verschleißverhalten zu nennen.

Der Materialverbund der Oberwaren besteht zumeist aus mehr als zwei Einzelschichten. In die Einzelschichten, die mit dem Teppich kaschiert werden müssen, ist die für die Kaschierung und Verformung erforderliche Wärme einzubringen. Bei den aus dem Stand der Technik bekannten Anlagen und Verfahren [zum Beispiel: Warenspeicher > Ablagetisch > Kontaktheizfeld > Kontaktheizfeld > Verformungswerkzeug; (Prozessführung nur in Durchlaufrichtung)] ist es nicht realisierbar, die Wärme in den Mehrschichverbund einzubringen, wenn dieser bereits komplett auf dem Ablagetisch gelegt wird; und mittels Transportsystem die einzelnen Prozessschritte durchlaufen muss (in Durchlaufrichtung). Insbesondere dann, wenn Schwerfolien mit Flächengewichten größer 1,5 kg/m² und Vliese mit Flächengewichten größer 300 g/m² im Verbund sind.

Der vorliegenden Erfindung liegt daher die Aufgabe zugrunde, Verfahren und Vorrichtungen zur Herstellung von geformten textilen Mehrschichtverbunden bereitzustellen, die die Nachteile aus dem Stand der Technik vermeiden. Insbesondere sollen der Materialbedarf und die Zykluszeiten verringert werden und das Einbringen der für das Kaschieren und Verformen erforderlichen Wärme auch bei kurzen Zykluszeiten ermöglicht werden.

Die erfindungsgemäße Aufgabenstellung wird gelöst durch ein Verfahren zur Herstellung von geformten textilen Mehrschichtverbunden, insbesondere Oberwaren von Bodenverkleidungen im Automobilbereich, aus mindestens zwei Einzelschichten und/oder Einzelschichtverbunden, umfassend die folgenden Schritte:
i. Erwärmen der mindestens zwei Einzelschichten und/oder Einzelschichtverbundeii. Kaschieren der Einzelschichten und/oder Einzelschichtverbunde zu einem Gesamtverbundiii. Formen des Gesamtverbunds in einer Verformungspresse mit einem darinbefindlichen Verformungswerkzeug,dadurch gekennzeichnet, dassa) die Erwärmung von mindestens zwei Einzelschichten und/oder Einzelschichtverbunden unabhängig voneinander erfolgt und die erwärmten Schichten vordem Kaschieren zusammengeführt werden, undb) der Gesamtverbund vor dem Formen in mindestens einer Richtung flächig verstreckt wird, wobei das Ausmaß der Verstreckung über den Verlauf einer Achse senkrecht zur Verstreckungsrichtung innerhalb der Verstreckungsebene unterschiedlich ist, wobei das Verstrecken mithilfe von Greifern durchgeführt wird, die entlang einer Seite des Gesamtverbundes angeordnet werden und einzeln ansteuerbar sind, wobei sich auf diese Weise das Ausmaß der Verstreckung für jeden Greifer einzeln festlegen lässt, so dass über die Seite an der die Greifer angebracht werden in unterschiedlichem Ausmaß in eine Richtung senkrecht zu dieser Seite flächig verstreckt werden kann.

Das erfindungsgemäße Verfahren zeichnet sich insbesondere dadurch aus, dass die Einzelschichten und/oder Einzelschichtverbunde in separaten Schritten erwärmt werden und vor dem Verformen erst zu einem Gesamtverbund kaschiert werden. Das Kaschieren kann beispielsweise in einer Kaschierstation erfolgen.

Das erfindungsgemäße Verfahren ermöglicht damit überraschenderweise eine effiziente Prozessführung in Bezug auf das Einbringen der Prozesstemperatur in den Mehrschichtverbund. Damit wird ein bauteilspezifischer Kaschier- und Verformungsprozess gewährleistet. Insbesondere lässt sich die erforderliche Prozesstemperatur in den Materialverbund einbringen, ohne dass Einzelschichten durch ver-/anbrennen, schmelzen oder reißen zerstört werden, womit eine feste und haltbare Kaschierung ermöglicht wird.

Das erfindungsgemäße Verfahren zeichnet sich darüber hinaus dadurch aus, dass der Gesamtverbund in mindestens einer Richtung flächig verstreckt wird, wobei das Ausmaß der Verstreckung über den Verlauf einer Achse senkrecht zur Verstreckungsrichtung innerhalb der Verstreckungsebene (somit insbesondere längs oder quer) unterschiedlich ist. Überraschenderweise hat sich gezeigt, dass durch flächiges Verstrecken des Gesamtverbunds in mindestens einer Richtung, und insbesondere durch Verstrecken in unterschiedlichem Ausmaß über den Verlauf einer Achse senkrecht zur Verstreckungsrichtung, deutliche Materialeinsparungen realisiert werden können.

Bei dem herzustellenden Gesamtverbund handelt es sich insbesondere um die Oberware einer Bodenverkleidung im Automobilbereich. Als Einzelschichten und/oder Einzelschichtverbunde kann prinzipiell jede aus dem Stand der Technik bekannt Schicht eingesetzt werden, insbesondere die zuvor beschriebenen Schichten, wie beispielsweise Tufting-, Dilour- oder Flachnadelvliesteppiche sowie Unterschichten in Form von Akustik- und Versteifungsvliesen, Schwerfolien, Dichtfolien- und Kontaktfolienvliese, Gitternetzfolien und Carbonfaservliese.

Beispielsweise können Akustik-/Versteifungsvliese und gegebenenfalls Dichtfolien und Kontaktfolienvliese sowie Gitternetzfolien und Carbonfaservliese zunächst auf Prozesstemperatur erwärmt werden. Das Erwärmen kann insbesondere in einer ersten Kontaktheizung (Heizstation) erfolgen.

Ein Teppich und gegebenenfalls weitere Vliese und/oder Schwerfolien können unabhängig davon erwärmt werden, beispielsweise in einem Strahlerheizfeld.

Die so erwärmten Schichten werden im Anschluss zusammengeführt und zu einem Gesamtverbund (Oberware) kaschiert, beispielsweise in einer Kaschierstation in Form eines Kontaktheizfeldes.

Die Temperatur- und Zeit-Einstellungen in den Heiz- und Kaschierstationen werden durch die Materialtypen der Einzel- und Einzelschichtverbunde, insbesondere bei den Teppichtypen auch durch den Fasermix -mit und ohne Mantel-Kern-Zweikomponenten- (BiCo) Fasern, bestimmt.

Nach dem Kaschieren wird der Gesamtverbund in einer Verformungspresse mit einem Verformungswerkzeug geformt. Hierzu wird der Gesamtverbund von einer Kaschierstation zur Verformungspresse transportiert. Die Prozesstemperatur im Verformungswerkzeug liegt vorzugsweise in einem Bereich von -5 bis +25 °C. Besonders bevorzugt sind Temperaturen in einem Bereich von 0 bis 7 °C. Die Verweilzeit im Verformungswerkzeug liegt vorzugsweise in einem Bereich von 25 bis 95 Sekunden, bevorzugt 35 bis 72 Sekunden.

In einer alternativen Ausführungsform können Kaschieren und Verformen in einem Arbeitsschritt durchgeführt werden. Diese Variante ist besonders bevorzugt, wenn ein Gesamtverbund aus einem Teppich und einem einzelnen (Unter)Vlies hergestellt werden soll. Hierbei kann beispielsweise ein (Unter)Vlies zugeschnitten werden und auf Prozesstemperatur erwärmt werden, insbesondere in einem Kontaktheizfeld. Unabhängig davon wird ein zugeschnittener Teppich erwärmt, beispielsweise in einem Strahlerheizfeld. Die Schichten werden in Kontakt gebracht und in einem Schritt gleichzeitig kaschiert und geformt. Dieser Schritt kann insbesondere in einer Verformungspresse mit einem Verformungswerkzeug durchgeführt werden.

Erfindungsgemäß wird der erwärmte Gesamtverbund vor dem Formen in mindestens einer Richtung flächig verstreckt. Erfolgt das Formen in einer Verformungspresse, kann das Verstrecken vor und/oder während des Schließens der Verformungspresse stattfinden. Das Ausmaß der Verstreckung ist über den Verlauf einer Achse senkrecht zur Verstreckungsrichtung innerhalb der Verstreckungsebene unterschiedlich.

Bevorzugt wird der erwärmte Gesamtverbund während des Transports zur Verformungspresse verstreckt. Findet das Kaschieren und das Formen in verschiedenen Stationen statt, wird der Gesamtverbund vorzugsweise nach dem Kaschieren verstreckt. In einer alternativen Ausführungsform kann der Gesamtverbund auch in der Verformungspresse vor und/oder während des Schließens der Verformungspresse verstreckt werden.

Bevorzugt wird der erwärmte Gesamtverbund über den Verlauf seiner Längsseite in unterschiedlichem Ausmaß in Querrichtung verstreckt. Alternativ wird der Gesamtverbund über den Verlauf seiner Querseite in unterschiedlichem Ausmaß in Längsrichtung verstreckt. Der Gesamtverbund kann auch in mehrere unabhängige Richtungen verstreckt werden, insbesondere sowohl in Querrichtung als auch in Längsrichtung.

Das Ausmaß der Verstreckung beträgt vorzugsweise in Längsrichtung (Durchlaufrichtung) zwischen 5% und 20%; und in Querrichtung zwischen 5% und 35%.

Das Verstrecken kann beispielsweise mithilfe von Greifern durchgeführt werden, die entlang einer Seite des Gesamtverbunds angeordnet werden und einzeln ansteuerbar sind. Auf diese Weise lässt sich das Ausmaß der Verstreckung für jeden Greifer einzeln festlegen, sodass über die Seite an der die Greifer angebracht werden in unterschiedlichem Ausmaß in eine Richtung senkrecht zu dieser Seite flächig verstreckt werden kann.

Die Greifer können beispielsweise Teil eines Transportsystems sein, mit dem der Gesamtverbund von der Kaschierstation zur Verformungspresse transportier wird. Insbesondere kann der Gesamtverbund während des Transports durch Greifer am Transportsystems Querrichtung bezogen auf die Transportrichtung verstreckt werden. Das Verstrecken kann jedoch auch noch in der Kaschierstation, nach deren Öffnung oder auch in der Verformungspresse durchgeführt werden.

Die Greifer können auch Teil der Verformungspresse sein. Insbesondere kann der Gesamtverbund durch an der Verformungspresse angebrachte Greifer vor und/oder während des Schließens des Verformungswerkzugs in Längsrichtung bezogen auf die Transportrichtung verstreckt werden.

In einer bevorzugten Ausführungsform wird der Gesamtverbund werkzeug-konturfolgend in das sich schließende Verformungswerkzeug transportiert. Insbesondere kann der Gesamtverbund durch drehbare Greifer (Klemmzangen im Greifer) am Transportsystem und durch die Greifer in/an der Verformungspresse geführt in das sich schließende Verformungswerkzeug transportiert werden. Das Nachfließen des Verbundes ist somit steuerbar. Dies ermöglicht das Führen des Verbundes in Korrelation zur Kontur des Verformungswerkzeuges (Reduzierung des Ausziehgrades, Vermeidung von Faltenbildung).

In einer weiteren Ausführungsform wird die erfindungsgemäße Aufgabenstellung gelöst durch eine Thermoverformungsanlage zur Herstellung von verformten textilen Mehrschichtverbunden, insbesondere von Oberwaren von Bodenverkleidungen im Automobilbereich, umfassend eine Heizstation 3, eine Kaschierstation 4, eine weitere Heizstation 5, eine Verformungspresse 6 mit einem Verformungswerkzeug 9 und mindestens ein Transportsystem 7, wobei das Transportsystem zum Transport von Einzelschichten und/oder Einzelschichtverbunden zwischen den Stationen - sowie auch des Gesamtverbunds - geeignet ist, dadurch gekennzeichnet, dass
a) die Heizstation 3, die Kaschierstation 4 und die Verformungspresse 6 eine Durchlaufrichtung bilden und die weitere Heizstation 5 seitlich zu dieser Durchlaufrichtung angeordnet ist,
b) das Transportsystem 7 einseitig oder beidseitig entlang der Durchlaufrichtung mit einzeln ansteuerbaren, insbesondere drehbaren, Greifern ausgerüstet ist, und
c) die Verformungspresse 6 einseitig oder beidseitig senkrecht zur Durchlaufrichtung mit einzeln ansteuerbaren, insbesondere drehbaren, Greifern 8 ausgerüstet ist, wobei
die einzeln ansteuerbaren Greifer (8) geeignet sind, einen Materialverbund in Durchlaufrichtung und/oder quer zur Durchlaufrichtung zu verstrecken, wobei für mindestens eine Verstreckungsrichtung das Ausmaß der Verstreckung über den Verlauf einer Achse senkrecht zur Verstreckungsrichtung innerhalb der Verstreckungsebene (somit längs und/oder quer) unterschiedlich ist.

Die erfindungsgemäße Thermoverformungsanlage ist zur Durchführung des erfindungsgemäßen Verfahrens geeignet. Insbesondere eignet sich die Vorrichtung zur Herstellung von Oberware einer Bodenverkleidung im Automobilbereich. Beispielsweise können Akustik-/Versteifungsvliese und gegebenenfalls Dichtfolien und Kontaktfolienvliese, des Weiteren Gitternetzfolien und Carbonfaservliese in der Heizstation 3 zunächst auf Prozesstemperatur erwärmt werden. Unabhängig davon kann ein Teppich und gegebenenfalls weitere Vlies und/oder Schwerfolien in der seitlich angeordneten weiteren Heizstation 5 erwärmt werden. Mithilfe des Transportsystems 7 können die erwärmten Einzelschichten und/oder Einzelschichtverbunde in die Kaschierstation 4 transportiert, dort kaschiert und dann in die Verformungspresse 6 transportiert und dort geformt werden.

Die erfindungsgemäße Thermoverformungsanlage kann neben dem in Durchlaufrichtung arbeitenden Transportsystem 7 ein weiteres Transportsystem 7.1 aufweisen, welches quer zur Durchlaufrichtung arbeitet und die in der weiteren Heizstation 5 erwärmten Einzelschichten und/oder Einzelschichtverbunde zu den Stationen in Durchlaufrichtung transportiert.

In einer bevorzugten Ausführungsform umfasst die Thermoverformungsanlage weiterhin eine Kaschierstation 4, die in Durchlaufrichtung zwischen der Heizstation 3 und der Verformungspresse 6 angeordnet ist. Die Kaschierstation 4 umfasst insbesondere ein Kontaktheizfeld. In dieser Ausführungsform ist die weitere Heizstation 5 bevorzugt seitlich zur Kaschierstation 4 angeordnet. Die Einzelschichten und/oder Einzelschichtverbunde können wie zuvor beschrieben in der Heizstation 3 und der weiteren Heizstation 5 erwärmt werden und anschließend in der Kaschierstation 4 kaschiert werden und mithilfe des Transportsystems 7 zum Formen in die Verformungspresse 6 transportiert werden. In der Verformungspresse 6 befindet sich das Verformungswerkzeug 9; sowie an der Verformungspresse 6 das Greifersystem 8.

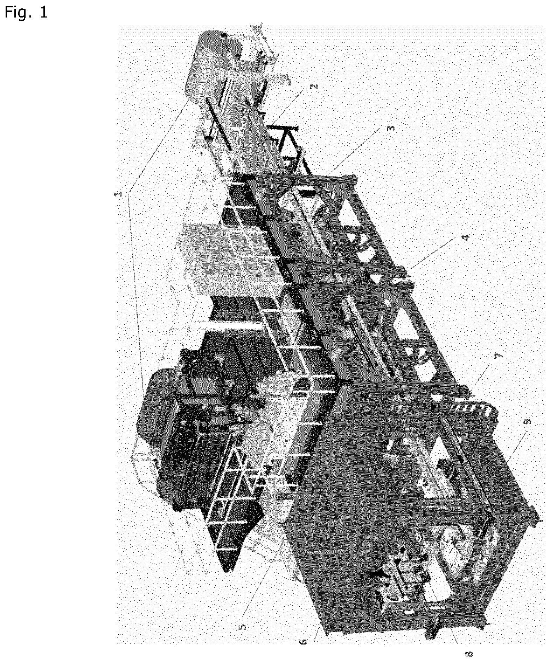

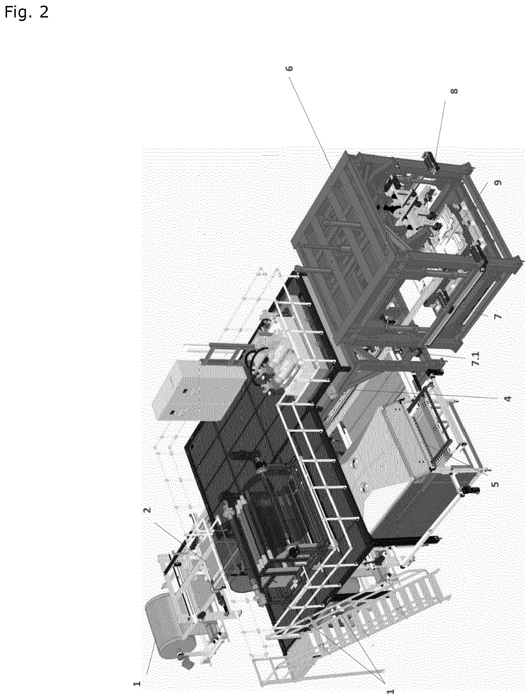

Figur 1 und Figur 2 zeigen verschiedene Ansichten einer erfindungsgemäßen Thermoverformungsanlage.

In einer bevorzugten Ausführungsform handelt es sich bei der Heizstation 3 um ein Kontaktheizfeld. Bei der weiteren Heizstation 5 handelt es sich bevorzugt um ein Strahlerheizfeld.

Erfindungsgemäß sind das Transportsystem 7 und die Verformungspresse 6 mit einzeln ansteuerbaren Greifern ausgerüstet. Insbesondere handelt es sich um drehbare Greifer. Das Transportsystem 7 kann beispielsweise einseitig oder beidseitig entlang der Durchlaufrichtung mit einzeln ansteuerbaren Greifern ausgerüstet sein. Die Verformungspresse 6 kann beispielsweise einseitig oder beidseitig senkrecht (Verstreckung in Durchlaufrichtung) zur Durchlaufrichtung mit einzeln ansteuerbaren Greifern ausgerüstet sein.

Die einzeln ansteuerbaren Greifer sind geeignet, einen Materialverbund in mindestens einer Richtung zu verstrecken. Vorzugsweise ist eine flächige Verstreckung in mindestens einer Richtung in unterschiedlichem Ausmaß über den Verlauf einer Achse senkrecht zur Verstreckungsrichtung innerhalb der Verstreckungsebene möglich. Dies wird durch die einzeln ansteuerbaren Greifer ermöglicht, die in unterschiedlichem Ausmaß eine Kraft auf den Materialverbund ausüben können.

Beispielsweise können einseitig oder beidseitig am Transportsystem 7 entlang der Durchlaufrichtung angebrachte einzeln ansteuerbare Greifer geeignet sein, den Gesamtverbund quer zur Durchlaufrichtung zu verstrecken. Insbesondere können solche Greifer geeignet sein, die Verstreckung in unterschiedlichem Ausmaß über den Verlauf der Durchlaufrichtung zu ermöglichen.

Beispielsweise sind einseitig oder beidseitig an der Verformungspresse 6 senkrecht zur Durchlaufrichtung angebrachte einzeln ansteuerbare Greifer (8) geeignet, den Gesamtverbund in Durchlaufrichtung zu verstrecken. Insbesondere sind solche Greifer (8) geeignet, die Verstreckung in unterschiedlichem Ausmaß über den Verlauf einer Achse senkrecht zur Durchlaufrichtung zu ermöglichen.

In einer weiteren bevorzugten Ausführungsform sind die Greifer (8) geeignet, den Materialverbund werkzeug-konturfolgend in das Verformungswerkzeug 9 zu führen.

Die erfindungsgemäße Thermoverformungsanlage kann weitere Vorrichtungen umfassen. Insbesondere kann sie einen oder mehrere Warenspeicher 1 für Rollen- und Platinenware, einen oder mehrere Ablagetische 2 und/oder pick-and-place Stationen umfassen. Beispielsweise kann ein Ablagetisch 2 in Durchlaufrichtung vor der Heizstation 3 angeordnet sein. Vor dem Ablagetisch 2 kann insbesondere ein Warenspeicher 1 angeordnet sein. Quer zur Durchlaufrichtung kann beispielsweise ein Warenspeicher 1 vor der weiteren Heizstation 5 angeordnet sein.

Im Folgenden werden die einzelnen Vorrichtungen der erfindungsgemäßen Thermoverformungsanlage näher charakterisiert, ohne dass die Erfindung auf diese Ausgestaltungen beschränkt wäre.

Die Heizstation 3 kann insbesondere ein Kontaktheizfeld umfassen. Beispielsweise kann das Kontaktheizfeld über eine doppelseitig geregelte Beheizung, eine Spaltmaßeinstellung sowie eine doppelseitig geregelte Heizfeldbreite verfügen. Die Heizfeldbreiteneinstellung kann elektrisch (Motor mit Spindel), hydraulisch, pneumatisch oder per Hand (Kurbel mit Spindel) erfolgen. Über das Heizfeld kann eine Schutzfolie, insbesondere eine Teflonfolie gespannt sein. Die über das Heizfeld gespannten (Teflon-)Folien sind mittels Federsystem gespannt und somit in der Breite anpassbar.

Die Kaschierstation 4 kann ebenfalls ein Kontaktheizfeld umfassen, das die gleichen Eigenschaften wie das zuvor beschriebene aufweist. Die Kaschierstation kann die erwärmten Einzelschichten und/oder Einzelschichtverbunde, die in Durchlaufrichtung oder seitlich zur Durchlaufrichtung zugeführt werden, aufnehmen und kaschieren.

Die weitere Heizstation 5 kann insbesondere ein Strahlerheizfeld umfassen. Das Strahlerheizfeld kann eine integrierte Schneidevorrichtung zum Zuschneiden einer Platine, beispielsweise eines Teppichs, aufweisen. Die Heizintensität kann in Heizzonen regelbar sein und das Strahlerheizfeld zudem eine geregelte Heizfeldbreite aufweisen. Ein Mehrschichtverbund kann auch unter dem Strahlerheizfeld gelegt werden.

Mittels pick-and-place ist auch eine partielle Bestückung des Strahlerheizfelds möglich.

Die Verformungspresse 6 mit Verformungswerkzeug 9 dient der Formgebung. Insbesondere verfügt die Verformungspresse 6 über einen doppelseitig geregelten Hub, eine Werkzeugzentriervorrichtung, eine Werkzeugspannvorrichtung und/oder ein Werkzeugwechselsystem.

Die Verformungspresse 6 kann mit höhen- und breitenverstellbaren Greifern ausgerüstet sein. Das Greifersystem verfügt insbesondere über einen geregelten Hub und lässt sich an verschiedene Werkzeugabmessungen anpassen. Ein gesteuertes Öffnen und Schließen der Greifer kann möglich sein. Bevorzugt sind die Greifer drehbar und geeignet, ein gesteuertes Nachfließen eines Materialverbunds entsprechend der Werkzeugkonturen zu ermöglichen. Die Greifer sind insbesondere geeignet, einen Materialverbund vor und/oder während des Schließens des Werkzeugs in Durchlaufrichung zu verstrecken. Die Greifer können einzeln ansteuerbar sein und damit ein Verstrecken in Durchlaufrichtung in unterschiedlichem Ausmaß über eine Achse senkrecht zur Durchlaufrichtung ermöglichen.

Das Transportsystem 7 transportiert die Einzelschichten, Einzelschichtverbunde sowie den Gesamtverbund insbesondere in Durchlaufrichtung und kann durch ein weiteres Transportsystem 7.1 zum Transport seitlich zur Durchlaufrichtung ergänzt sein. Das Transportsystem 7 kann insbesondere ein (Unter-)Vlies-Sandwich (Einzelschicht/Einzelschichtverbund) in Durchlaufrichtung von der Heizstation 3 zur Kaschierstation 4 und/oder zur Verformungspresse 6 transportieren. Ein Gesamtverbund kann beispielsweise von der Kaschierstation 4 zur Verformungspresse 6 transportiert werden. Das Transportsystem 7.1 kann beispielweise einen Teppich und gegebenenfalls weitere darauf positionierte Einzelschichten seitlich zur Durchlaufrichtung zur Kaschierstation 4 transportieren.

Beide Transportsysteme können einen geregelten Hub aufweisen und höhen- und breitenverstellbar sein, um die Anpassung an das Werkzeug zu ermöglichen. Die Transportsysteme können Greifer mit Klemmzangen aufweisen, deren Öffnen und Schließen steuerbar ist. Die Greifer beziehungsweise Klemmzangen können drehbar ausgestaltet sein. Die Transportsysteme sind insbesondere taktgesteuert.

Insbesondere das Transportsystem 7 in Durchlaufrichtung kann mit einzeln ansteuerbaren Greifern, insbesondere drehbaren Greifern, ausgerüstet sein. Damit kann der erwärmte, kaschierte Mehrschichtverbund in Durchlaufrichtung über die Länge in unterschiedlichem Ausmaß in Querrichtung verstreckt werden.

Das mit drehbaren Greifern ausgestatte Transportsystem kann insbesondere geeignet sein, ein gesteuertes Nachfließen eines Materialverbunds entsprechend der Werkzeugkonturen in das Verformungswerkzeug 9 zu ermöglichen.

Der Warenspeicher 1 kann eine Rollen- oder Plattenware bereitstellen. Die Rolle kann von oben oder unten bereitgestellt werden, wobei eine gewichts- oder Rollendurchmesser-abhängige Rollenbremsung erfolgen kann. Der Warenspeicher kann eine automatische Kantensteuerung, einen automatischen Antrieb und/oder eine spannungsabhängige Rollenbreitenverstellung aufweisen.

Ein Ablagetisch 2 kann geeignet sein, eine Platine eines Mehrschichtverbunds zuzuschneiden oder einen Mehrschichtverbund zu legen. Mittels pick-and-place-Stationen ist auch eine partielle Bestückung der Vorrichtung möglich.

### Ausführungsbeispiele :

### Beispiel 1:

Der folgende Materialverbund wurde zu einer Bodenverkleidung (Werkzeug Skoda Octavia) verformt:
Dilour-Teppich (450 g/m² PET-Fasern + 80 g/m² Latex-Einbindung + 80 g/m² PE-Beschichtung); Schwerschicht (4700 g/m²); Akustik-/Versteifungsvlies mit 40% BiCo-Faser-Anteil / Mischfaservlies (700 g/m²).

Thermo-Verformungs-Anlage:
In Durchlaufrichtung: Warenspeicher 1 > Ablagetisch 2 > Kontaktheizfeld als Heizstation 3 > Kontaktheizfeld als Kaschierstation 4 > Verformungspresse 6 mit Verformungswerkzeug 9. Seitlich zur Durchlaufrichtung war ein Warenspeicher 1 und dahinter ein Strahlerheizfeld als weitere Heizstation 5 auf Höhe der Kaschierstation 4 angebracht. Die Vorrichtung entsprach der in Figur 1 und 2 dargestellten Ausführungsform der Erfindung.

Die Heizstation 3 war beidseitig auf 220 °C temperiert, die Verweilzeit betrug 39 s, die Kaschierstation 4 war vliesseitig auf 240 °C und teppichseitig auf 90 °C temperiert, die Verweilzeit betrug hier 36 s. Das Verformungswerkzeug 9 war auf 5 °C temperiert, die Kühlzeit betrug 40 s und der Werkzeugspalt 6mm. In Durchlaufrichtung wurde das Vlies gefahren.

Seitlich wurde der Teppich mit aufgelegter Schwerfolie zugefahren; die Schwerfolie zum Strahlerheizfeld (Heizstation 5); die Intensität von 90% wurde eingestellt, die gemessene Temperatur auf der Schwerfolie betrug 144 °C, die Verweilzeit betrug 40 s und der Abstand Teppich/Schwerfolie zum Strahlerheizfeld war 25 mm.

Nach Erwärmung des Vlieses wurde dieses mittels Transportsystem 7 in das 2. Kontaktheizfeld (Kaschierstation 4) transportiert; seitlich Teppich/Schwerfolie mit einem zweiten Transfersystem (Transportsystem 7.1) zugefahren und kaschiert. Nach der Kaschierung im 2. Kontaktheizfeld (Kaschierstation 4) wurde der kaschierte Gesamtverbund in das Verformungwerkzeug 9 transportiert und vor dem Schließen 20% querverstreckt. Die Zykluszeit betrug 60 s.

Die so hergestellte Bodenverkleidung (Oberware) entsprach den Qualitätsanforderungen der Automobilindustrie.

In einem zweiten Schritt wurden die Verweilzeiten wie folgt verändert:
1. Kontaktheizfeld (Heizstation 3) 35 s, 2. Kontaktheizfeld (Kaschierstation 4) 35 s und die Kühlzeit 35 s; die Zykluszeit betrug 52 s. Auch diese verformte Oberware entsprach den Qualitätsanforderungen.

### Beispiel 2:

Der folgende Materialverbund wurde zu einer Bodenverkleidung (Werkzeug Skoda Octavia) verformt:
Tufting-Teppich (360 g/m² PA6-Garn + 380 g/m² PE-Beschichtung);
Akustik-/Versteifungsvlies (600 g/m² PET-Fasern mit 20% BiCo-Faser-Anteil).

Thermoverformungsanlage :
In Durchlaufrichtung: Warenspeicher > Ablagetisch > Kontaktheizfeld > Verformungswerkzeug. Seitlich zur Durchlaufrichtung war ein Warenspeicher und dahinter ein Strahlerheizfeld auf Höhe des Kontaktheizfelds angebracht.

Zum Einsatz kam nur ein Kontaktheizfeld (Kaschierung), mit den folgenden Einstellungen: vliesseitig 240 °C und teppichseitig 85 °C, Verweilzeit 40 s. Das Verformungswerkzeug war auf 5 °C temperiert, die Kühlzeit betrug 40 s und der Werkzeugspalt 6 mm. In Durchlaufrichtung wurde das PET-Vlies gefahren.

Seitlich wurde der Teppich zugefahren, die Teppichrückseite (PE-Beschichtung) zum Strahlerheizfeld; die Intensität von 95% wurde eingestellt, die gemessene Temperatur auf der Teppichrückseite betrug 110 °C, die Verweilzeit betrug 20 s und der Abstand Teppichrückseite zum Strahlerheizfeld 30 mm.

Das Vlies wurde mittels Transportsystem in das Kontaktheizfeld transportiert, seitlich der Teppich mit einem zweiten Transfersystem zugefahren und kaschiert. Nach der Kaschierung im Kontaktheizfeld wurde der kaschierte Mehrschichtverbund in das Verformungwerkzeug transportiert und vor dem Schließen 10% querverstreckt. Die Zykluszeit betrug 55 s. Die verformte Oberware entsprach den Qualitätsanforderungen.

## Patentansprüche

1. Verfahren zur Herstellung von geformten textilen Mehrschichtverbunden, aus mindestens zwei Einzelschichten und/oder Einzelschichtverbunden, umfassend die folgenden Schritte:
i. Erwärmen der mindestens zwei Einzelschichten und/oder Einzelschichtverbunde
ii. Kaschieren der Einzelschichten und/oder Einzelschichtverbunde zu einem Gesamtverbund
iii. Formen des Gesamtverbunds in einer Verformungspresse mit einem darin befindlichen Verformungswerkzeug,
**dadurch gekennzeichnet, dass**
a) die Erwärmung von mindestens zwei Einzelschichten und/oder Einzelschichtverbunden unabhängig voneinander erfolgt und die erwärmten Schichten vor dem Kaschieren zusammengeführt werden, und
b) der Gesamtverbund vor dem Formen in mindestens einer Richtung flächig verstreckt wird, wobei das Ausmaß der Verstreckung über den Verlauf einer Achse senkrecht zur Verstreckungsrichtung innerhalb der Verstreckungsebene unterschiedlich ist, wobei das Verstrecken mithilfe von Greifern durchgeführt wird, die entlang einer Seite des Gesamtverbundes angeordnet werden und einzeln ansteuerbar sind, wobei sich auf diese Weise das Ausmaß der Verstreckung für jeden Greifer einzeln festlegen lässt, so dass über die Seite an der die Greifer angebracht werden in unterschiedlichem Ausmaß in eine Richtung senkrecht zu dieser Seite flächig verstreckt werden kann.

2. Verfahren gemäß Anspruch 1, **dadurch gekennzeichnet, dass** mindestens ein(e) unabhängig erwärmte(r) Einzelschicht/Einzelschichtverbund ausgewählt ist aus Akustik- und Versteifungsvliesen, Dichtfolien, Kontaktfolienvliesen, Gitternetzfolien, Carbonfaservliese und deren Mehrschichtverbunden.

3. Verfahren gemäß Anspruch 1 oder 2, **dadurch gekennzeichnet, dass** mindestens ein(e) unabhängig erwärmte(r) Einzelschicht/Einzelschichtverbund ausgewählt ist aus Tufting-, Dilour- und Flachnadelvliesteppichen, Schwerfolien und deren Mehrschichtverbunden.

4. Verfahren gemäß einem der Ansprüche 1 bis 3, **dadurch gekennzeichnet, dass** die Schritte des Kaschierens und Verformens in einem Schritt in der Verformungspresse oder in zwei Schritten erfolgen.

5. Verfahren gemäß einem der Ansprüche 1 bis 4, **dadurch gekennzeichnet, dass** der Gesamtverbund vor dem Formen über den Verlauf einer Längsseite in unterschiedlichem Ausmaß in Querrichtung und/oder über den Verlauf einer Querseite in unterschiedlichem Ausmaß in Längsrichtung verstreckt wird.

6. Verfahren gemäß einem der Ansprüche 1 bis 5, **dadurch gekennzeichnet, dass** der Gesamtverbund werkzeugkonturfolgend in das sich schließende Verformungswerkzeug transportiert wird.

7. Thermoverformungsanlage zur Herstellung von verformten textilen Mehrschichtverbunden, umfassend eine Heizstation (3), eine Kaschierstation (4), eine weitere Heizstation (5), eine Verformungspresse (6) mit einem Verformungswerkzeug (9) und mindestens ein Transportsystem (7), wobei das Transportsystem zum Transport von Einzelschichten und/oder Einzelschichtverbunden zwischen den Stationen geeignet ist, **dadurch gekennzeichnet, dass**
a) die Heizstation (3), die Kaschierstation (4) und die Verformungspresse (6) eine Durchlaufrichtung bilden und die weitere Heizstation (5) seitlich zu dieser Durchlaufrichtung angeordnet ist,
b) das Transportsystem (7) einseitig oder beidseitig entlang der Durchlaufrichtung mit einzeln ansteuerbaren, Greifern ausgerüstet ist, und
c) die Verformungspresse (6) einseitig oder beidseitig senkrecht zur Durchlaufrichtung mit einzeln ansteuerbaren, insbesondere drehbaren, Greifern (8) ausgerüstet ist, wobei die einzelnen ansteuerbaren Greifer geeignet sind, einen Materialverbund in Durchlaufrichtung und/oder quer zur Durchlaufrichtung zu versrecken, wobei für mindestens eine Verstreckungsrichtung das Ausmaß der Verstreckung über den Verlauf einer Achse senkrecht zur Verstreckungsrichtung innerhalb der Verstreckungsebene, und somit längs und/oder quer, unterschiedlich ist und die einzeln ansteuerbaren Greifer geeignet sind einen Materialverbund werkzeugkonturfolgend in das Verformungswerkzeug (9) zu führen.

8. Thermoverformungsanlage gemäß Anspruch 7, **dadurch gekennzeichnet, dass** es sich bei der Heizstation (3) und/oder der Kaschierstation (4) um ein Kontaktheizfeld handelt.

9. Thermoverformungsanlage gemäß einem der Ansprüche 7 oder 8, **dadurch gekennzeichnet, dass** es sich bei der seitlichen Heizstation (5) um ein Strahlerheizfeld handelt.

## Claims

1. A method for producing formed textile multilayer-composites from at least two single layers and/or single layer composites, comprising the steps:
i. heating the at least two single layer and/or single layer composites
ii. concealing the single layers and/or single layer composites to an overall composite
iii. forming of the overall composite in a forming press with forming tool arranged therein,
**characterized in that**
a) the heating of at least two single layers and/or single layer composites is carried out independently form each other and the heated layers are joined together before concealing, and
b) the overall composite is spatially stretched in at least one direction before forming, wherein the extent of the stretching is different over the course of an axis perpendicular to the stretching direction inside the stretching plane, wherein the stretching is carried out with the aid of grippers which are arranged along a side of the overall composite and individually controllable, wherein in this way the extent of the stretching can be determined individually for each gripper, so that over the side on which the grippers are arranged it can be spatially stretched in a direction perpendicular to these side in different extent.

2. The method according to claim 1, **characterized in that** at least one independent heated single layer/single layer composite is selected from acoustic- and reinforcing non-woven, sealing foils, contact foil non-woven, grid foils, carbon non-woven and their multilayer composites.

3. The method according to claim 1 or 2, **characterized in that** at least one independent heated single layer/single layer composite is selected from Tufting-, Dilour- and flat needle non-woven carpets, heavy foils and their multilayer composites.

4. The method according to claims 1 to 3, **characterized in that** the steps of concealing and forming are carried out in one step in the forming press or in two steps.

5. The method according to claims 1 to 4, **characterized in that** the overall composite is stretched over the course of a longitudinal side in different extent in transverse direction and/or over the course of a transverse side in different extend in longitudinal direction before forming.

6. The method according to claims 1 to 5, **characterized in that** the overall composite is transported into the closing forming tool following the contour of the tool.

7. Thermoforming plant for producing formed textile multilayer composites, comprising a heating station (3), a concealing station (4), a further heating station (5), a forming press (6) with a forming tool (9) and at least one transport system (7), wherein the transport system is suitable for transporting single layers and/or single layer composites,
**characterized in that**
a) the heating station (3), the concealing station (4) and the forming press (6) form a direction of flow and the further heating station (5) is arranged lateral to this direction of flow,
b) the transport system (7) is equipped on one side or on two sides along the direction of flow with individually controllable grippers, and
c) the forming press (6) is equipped on one side or on two sides perpendicular to the direction of flow with individually controllable in particular rotatable grippers (8), wherein the individually controllable grippers are suitable to stretch a material composite in direction of flow and/or cross the direction of flow, wherein for at least one stretching direction the extent of the stretching over the course of an axis perpendicular to the stretching direction inside the stretching plane and thus longitudinal and/or cross to the direction of flow is different and the individually controllable grippers are suitable to guide a material composite into the forming tool (9) following the contour of the tool.

8. The thermoforming plant according to claim 7, **characterized in that** the heating station (3) and/or the concealing station (4) is a contact heating field.

9. The thermoforming plant according to one of claims 7 or 8, **characterized in that** the lateral heating station (5) is a radiant heating field.

## Revendications

1. Procédé de fabrication de composites multicouches textiles façonnés à partir d'au moins deux monocouches et/ou de composites monocouches, comprenant les étapes suivantes :
i. le chauffage des au moins deux monocouches et/ou composites monocouches
ii. le contrecollage des monocouches et/ou des composites monocouches en un composite global
iii. le façonnage du composite global dans une presse à déformer avec un outil de déformation s'y trouvant,
**caractérisé en ce que**
a) le chauffage d'au moins deux monocouches et/ou composites monocouches est effectué de manière non interdépendante et les couches chauffées sont assemblées avant le contrecollage, et
b) le composite global est étiré à plat dans au moins une direction avant le façonnage, dans lequel l'ampleur de l'étirage est différente sur le tracé d'un axe de manière perpendiculaire à la direction d'étirage à l'intérieur du plan d'étirage, dans lequel l'étirage est effectué à l'aide de grappins, qui sont disposés le long d'un côté du composite global et peuvent être pilotés individuellement, dans lequel ainsi l'ampleur de l'étirage pour chaque grappin peut être fixée individuellement de sorte qu'il est possible de réaliser l'étirage à plat sur le côté sur lequel les grappins sont montés, selon une ampleur différente dans une direction de manière perpendiculaire par rapport audit côté.

2. Procédé selon la revendication 1, **caractérisé en ce qu'**au moins une monocouche /un composite monocouche chauffée/chauffé indépendamment est choisie/choisi parmi des non-tissés acoustiques et de renfort, des films étanches, des non-tissés en film de contact, des films en treillis, des non-tissés à base de fibres de carbone et leurs composites multicouches.

3. Procédé selon la revendication 1 ou 2, **caractérisé en ce qu'**au moins une monocouche/un composite monocouche chauffée/chauffé indépendamment est choisie/ choisi parmi des tapis tuftés, des tapis Dilour et des tapis aiguilletés plats, des films lourds et leurs composites multicouches.

4. Procédé selon l'une quelconque des revendications 1 à 3, **caractérisé en ce que** les étapes du contrecollage et de la déformation sont effectuées en une étape dans la presse à déformer ou en deux étapes.

5. Procédé selon l'une quelconque des revendications 1 à 4, **caractérisé en ce que** le composite global est étiré avant le façonnage sur le tracé d'un côté longitudinal selon une ampleur différente dans la direction transversale et/ou sur le tracé d'un côté transversal selon une ampleur différente dans la direction longitudinale.

6. Procédé selon l'une quelconque des revendications 1 à 5, **caractérisé en ce que** le composite global est transporté de manière à suivre le contour de l'outil dans l'outil de déformation se fermant.

7. Installation de thermoformage pour fabriquer des composites multicouches textiles déformés, comprenant un poste de chauffage (3), un poste de contrecollage (4), un autre poste de chauffage (5), une presse à déformer (6) avec un outil de déformation (9) et au moins un système de transport (7), dans laquelle le système de transport est adapté pour transporter des monocouches et/ou des composites monocouches entre les postes,
**caractérisée en ce que**
a) le poste de chauffage (3), le poste de contrecollage (4) et la presse à déformer (6) forment une direction de défilement et l'autre poste de chauffage (5) est disposé de manière latérale par rapport à ladite direction de défilement,
b) le système de transport (7) est équipé d'un côté ou des deux côtés, le long de la direction de défilement, de grappins pouvant être pilotés individuellement, et
c) la presse à déformer (6) est équipée d'un côté ou des deux côtés, de manière perpendiculaire par rapport à la direction de défilement, de grappins (8) pouvant être pilotés individuellement, en particulier pouvant tourner, dans lequel les divers grappins pouvant être pilotés sont adaptés pour étirer un composite de matériau dans la direction de défilement et/ou de manière transversale par rapport à la direction de défilement, dans laquelle l'ampleur de l'étirage sur le tracé d'un axe de manière perpendiculaire par rapport à la direction d'étirage à l'intérieur du plan d'étirage, et ainsi longitudinalement et/ou transversalement, est différente pour au moins une direction d'étirage et les grappins pouvant être pilotés individuellement sont adaptés pour guider un composite de matériau dans l'outil de déformation (9) en suivant le contour d'outil.

8. Installation de thermoformage selon la revendication 7, **caractérisée en ce que** le poste de chauffage (3) et/ou le poste de contrecollage (4) sont un panneau chauffant de contact.

9. Installation de thermoformage selon l'une quelconque des revendications 7 ou 8, **caractérisée en ce que** le poste de chauffage latéral (5) est un panneau chauffant irradiant.
